Europäisches Patentamt

European Patent Office

Office européen des brevets

(11) Veröffentlichungsnummer: **0 476 240 A1**

## EUROPÄISCHE PATENTANMELDUNG

(21) Anmeldenummer: **91110415.6**

(22) Anmeldetag: **24.06.91**

(51) Int. Cl.5: **B27B 25/04**, B27B 29/08, B27B 31/00, B23Q 7/03, B65G 17/46

(30) Priorität: **17.08.90 DE 4026088**

(43) Veröffentlichungstag der Anmeldung:
**25.03.92 Patentblatt 92/13**

(84) Benannte Vertragsstaaten:
**AT DE FR IT NL SE**

(71) Anmelder: **MSG Maschinen-Service GmbH**
**Windmühlenbergstrasse 20-22**
**W-3320 Salzgitter 51(DE)**

(72) Erfinder: **Righi, Eduard, Dipl.-Ing.**
**Pröllerstrasse 5**
**W-8380 Landau(DE)**

(54) Anlage zum Spannen von einer Bearbeitungsmaschine zuzuführenden Holzstämmen.

(57) Die Erfindung betrifft eine Anlage zum Spannen von einer Bearbeitungsmaschine zuzuführenden Holzstämmen, insbesondere von Krummholz, bei der die Holzstämme 2 in Längsrichtung auf einer Transportkette 1 aufliegen und auf dieser festgelegt werden durch sich von oben auf die Holzstämme auflegende Mitnehmer, die an einer oberhalb der Transportkette angeordneten geschlossenen Laufbahn 4 geführt synchron mit der Transportkette bewegt werden und deren Abwärtsbewegung auf die Holzstämme durch eine Führungsschiene oder dergleichen gesteuert wird. Die Erfindung zeichnet sich dadurch aus, daß die Mitnehmer als gewichtige Druckstücke 8 ausgebildet sind, die in lotrechter Richtung beweglich an Laufwagen 6 angeordnet sind, die an der in einer waagerechten Ebene verlaufenden Laufbahn 4 hängend umlaufen. Durch eine Führungsschiene 10, auf der je Laufwagen eine Rolle 9 läuft, wird der Eingriff der die Mitnehmer bildenden Druckstücke 8 gesteuert.

fig. 7

Die Erfindung betrifft eine Anlage zum Spannen von einer Bearbeitungsmaschine zuzuführenden Holzstämmen, insbesondere von Krummholz, bei der die Holzstämme in Längsrichtung auf einer Transportkette aufliegen und auf dieser festgelegt werden durch sich von oben auf die Holzstämme auflegende Mitnehmer, die an einer oberhalb der Transportkette angeordneten geschlossenen Laufbahn geführt synchron mit der Transportkette bewegt werden und deren Abwärtsbewegung auf die Holzstämme durch eine Führungsschiene oder dergleichen gesteuert wird.

Bei bekannten Anlagen dieser Art (DE-PS 960 383, DE-OS 15 03 926) sind die Mitnehmer als um quer zur Bewegungsrichtung verlaufende waagerechte Achsen verschwenkbare, an ihren Enden mit Spitzen oder Schneiden versehene Hebel ausgebildet, die an den Gliedern einer endlosen Kette angeordnet sind, die auf einer in einer lotrechten Ebene verlaufenden geschlossenen Bahn umlaufen. Im Bereich des unteren Trums dieser Umlaufbahn, das über der die Holzstämme aufnehmenden Transportkette verläuft, schwenken die Hebel nach unten aus und dringen mit ihren Spitzen oder Schneiden in die Holzstämme ein, um sie auf der Transportkette festzulegen, damit sie sich beim Durchlauf durch das Sägewerk nicht bewegen.

Diese Anlagen sind jedoch nur bedingt einsetzbar und für kurze Stämme mit sehr unterschiedlicher Dicke oder für krumme Stämme nicht geeignet. Die Hebel sind nicht stabil genug lagerbar und können daher die Stämme nicht ausreichend festlegen.

Aufgabe der Erfindung ist es, diese Mängel zu vermeiden und eine Ausbildung zu schaffen, die robust und einfach im Aufbau ist und dabei störungsfrei arbeitet, wenn Holzstämme sehr unterschiedlichen Durchmessers unmittelbar hintereinander auf der Transportkette zugeführt werden oder wenn die Holzstämme krumm sind.

Dies wird erfindungsgemäß dadurch erreicht, daß die Mitnehmer als gewichtige Druckstücke ausgebildet sind, die in lotrechter Richtung beweglich an Laufwagen angeordnet sind, die an der in einer waagerechten Ebene verlaufenden Laufbahn hängend umlaufen.

Dadurch, daß die Umlaufbewegung der Mitnehmer nicht - wie bekannt - in einer lotrechten sondern in einer waagerechten Ebene verläuft, ist es möglich, diese Vereinfachung mittels gewichtiger Druckstücke zu erzielen, die einfach durch die Schwerkraft, gegebenenfalls durch Federkraft verstärkt, ihre Festhaltefunktion ausüben.

Es sind zwar auch Anlagen bekannt, bei denen das Festlegen der Holzstämme durch aufliegende Gewichte erfolgt (DE-PS 302 298 und DE-OS 24 42 447). Diese bewegen sich jedoch nicht mit den Holzstämmen, sondern sind als Rollen ausgebildet bzw. mit Rollen versehen, unter denen die Holzstämme hinwegbewegt werden. Hierbei ist jedoch, insbesondere bei Krummholz, keine Gewähr für eine gute Führung gegeben. Sie sind außerdem kompliziert und aufwendig. Auch kommt man nicht im Falle der DE-OS 24 42 447 mit einer einzigen sogenannten "Vorschubeinheit" aus, sondern man benötigt mehrere hintereinander, wenn ein ausreichend sicheres Spannen erzielt werden soll.

Die Laufwagen können sämtlich durch Ketten oder andere Mittel zu einer geschlossenen Reihe miteinander verbunden sein und einen gemeinsamen Antrieb haben. Sie bewegen sich dann alle mit der gleichen Geschwindigkeit, die mit der Geschwindigkeit der Transportkette, auf der die Holzstämme liegen, übereinstimmt. Es ist aber auch möglich, die Laufwagen einzeln oder in Gruppen gesondert anzutreiben. Es ist dann möglich, sie nur auf dem Trakt der Laufbahn, der über der Transportkette liegt, mit der Geschwindigkeit der Transportkette laufen zu lassen, während sie auf dem übrigen, längeren Teil der Laufbahn, schneller angetrieben werden. Man kann dadurch mit einer geringeren Zahl von Laufwagen und Druckstücken auskommen.

Die der Steuerung der Auf- und Abbewegung der Druckstücke dienende Führungsschiene wird vorzugsweise neben der Laufbahn entlanggeführt. Neben dem - bezogen auf die Umlaufrichtung der Laufwagen - Anfang des Teils der Laufbahn, der sich über der Transportkette befindet, senkt sich die Führungsschiene ab und steigt am Ende dieses Teils wieder an. Die Druckstücke sind dazu mit einer Rolle versehen, die auf der Führungsschiene läuft.

Der ansteigende Teil der Führungsschiene kann auch durch ein Hebewerk ersetzt werden, das die abgesenkten Druckstücke wieder auf das Niveau anhebt, auf dem sie sich vor dem Absenken befanden, so daß die an den Druckstücken vorgesehene Rolle wieder auf die Führungsschiene gelangt.

Unterhalb des Teils der Laufbahn, der sich über der Transportkette befindet, sind beidseits der Laufwagen Schienen vorgesehen, zwischen denen sich die Laufwagen mit geringem Spiel hindurchbewegen, so daß sie seitlich nicht pendeln oder ausbrechen können.

Die Druckstücke sind an ihrem unteren, sich auf die Holzstämme auflegenden Ende mit nach unten gerichteten Spitzen oder Schneiden versehen, die in die Oberfläche der Holzstämme eindringen. Zur Erzielung einer guten Auflage auch bei krummen Holzstämmen sind die Spitzen oder Schneiden vorzugsweise an den beiden Enden von sich in Bewegungsrichtung erstreckenden Pratzen vorgesehen, die in ihrer Mitte um eine quer zur Bewegungsrichtung verlaufende waagerechte Achse verschwenkbar an den Druckstücken gelagert sind.

Die Anpassungsfähigkeit kann noch dadurch verbessert werden, daß an jedem Druckstück zwei solcher Pratzen vorgesehen sind, die an den Enden eines sich in Bewegungsrichtung erstreckenden zweiarmigen Hebels gelagert sind, der seinerseits um eine quer zur Bewegungsrichtung verlaufende waagerechte Achse an dem Druck stück verschwenkbar gelagert ist. Dadurch können auch Lücken zwischen zwei aufeinanderfolgenden Holzstämmen überbrückt werden.

Damit die Pratzen auch wirksam sind, wenn nur ein Teil der Spitzen oder Schneiden beim Absenken eines Druckstücks auf einen Holzstamm auftrifft, sind die Schwenkbewegungen der Pratzen und des zweiarmigen Hebels durch an den Druckstücken bzw. an dem Hebel vorgesehene Anschläge in beiden Schwenkrichtungen begrenzt.

Die Druckstücke müssen in den Laufwagen leichtgängig auf- und abbewegbar sein. Sie sind dazu - bezogen auf die Bewegungsrichtung der Laufwagen - vorn und hinten keilartig verjüngt und mit je einer lotrecht angeordneten Führungsstange versehen. Mit diesen beiden Führungsstangen sind die Druckstücke in Kugelumlaufbüchsen oder anderen kugellagerähnlichen Elementen gelagert, die in den Laufwagen angeordnet sind.

In der Zeichnung ist die Erfindung veranschaulicht, und zwar zeigt

Fig. 1    eine Draufsicht auf die Anlage,
Fig. 2    eine Seitenansicht der Anlage,
Fig. 3    eine Seitenansicht zweier Laufwagen mit Druckstücken in größerem Maßstab,
Fig. 4    einen waagerechten Schnitt bzw. eine Draufsicht nach der Linie I-I in Fig. 3,
Fig. 5    einen waagerechten Schnitt in noch größerem Maßstab durch ein Druckstück und seine Führungsmittel im Laufwagen,
Fig. 6    einen senkrechten Schnitt durch einen Teil der Anlage nach der Linie II-II in Fig. 3, in größerem Maßstab.

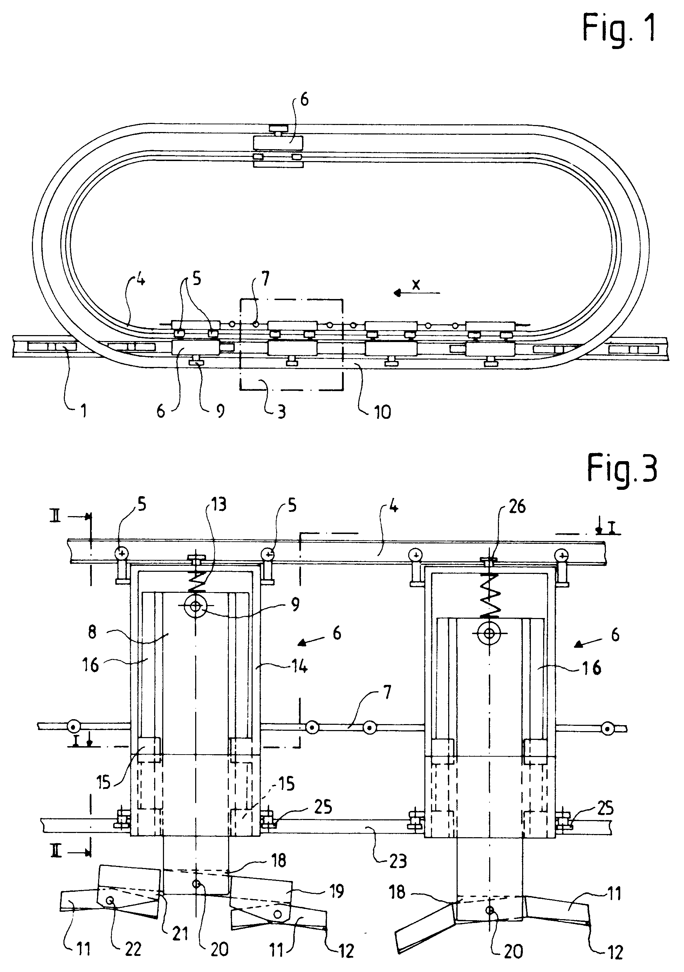

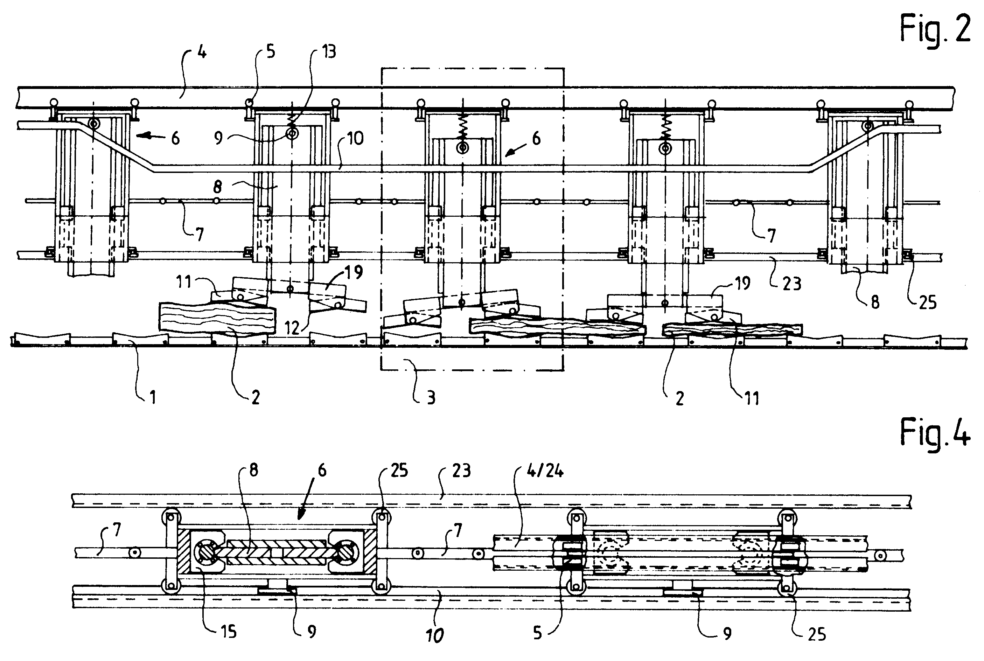

Die in Fig. 1 und 2 dargestellte Anlage weist eine waagerecht verlaufende Transportkette 1 auf, auf der Holzstämme 2 durch ein schematisch strichpunktiert dargestelltes Sägewerk 3, z.B. eine Doppelwellensäge, geführt werden. Oberhalb der Transportkette 1 ist eine geschlossene, in einer waagerechten Ebene liegende Laufbahn 4 angeordnet, von der der in Fig. 1 unten dargestellte Trakt lotrecht über der Transportkette 1 verläuft. An der Laufbahn 4 hängen mittels Rollen 5 Laufwagen 6, die durch Ketten 7 miteinander verbunden sind und durch einen nicht dargestellten, gemeinsamen Antrieb in Richtung des Pfeiles x umlaufen, und zwar mit einer Geschwindigkeit, die mit der Geschwindigkeit der Transportkette 1 übereinstimmt. In den Laufwagen 6 sind gewichtige Druckstücke 8 in lotrechter Richtung frei beweglich geführt. Sie sind mit je einer seitliche Rolle 9 versehen, die eine neben der Laufbahn 4 entlanggeführte Führungsschiene 10 übergreift. In Fig. 1 ist der Verlauf der Transportkette 1 und der Laufbahn 4 aus Gründen der Übersichtlichkeit nebeneinander dargestellt. In der Praxis wird die Laufbahn 4 in dem das Sägewerk 3 durchlaufenden Teil direkt senkrecht über der Transportkette 1 angeordnet sein.

An ihrem unteren Ende sind die Druckstücke 8 mit Pratzen 11 versehen, die nach unten gerichtete Spitzen oder Schneiden 12 aufweisen, welche beim Absenken der Druckstücke in die Oberfläche der Holzstämme 2 eindringen.

Die Führungsschiene 10 ist im Bereich des über der Transportkette 1 liegenden Traktes der Laufbahn 4 abgesenkt, so daß die in den übrigen Bereichen der Führungsschiene mittels der Rollen 9 von diesen in einer angehobenen Lage getragenen Druckstücke 8 sich unter der Wirkung der Schwerkraft und gegebenenfalls zusätzlich von Federn 13 in diesem Bereich abwärtsbewegen, bis sie sich auf die Holzstämme 2 auflegen. Sie drücken diese fest auf die Transportkette 1, so daß die Holzstämme sich auf ihr nicht bewegen können, wenn sie durch das Sägewerk 3 geführt werden.

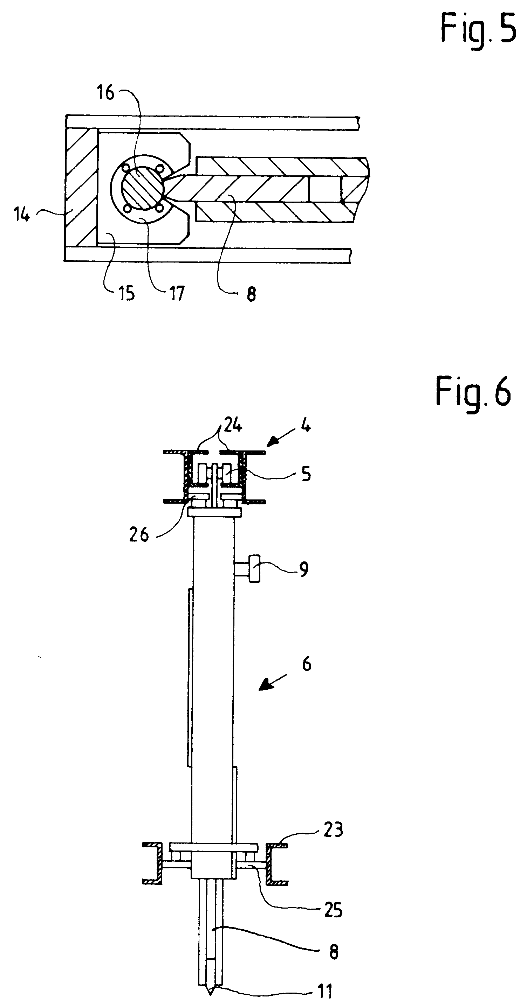

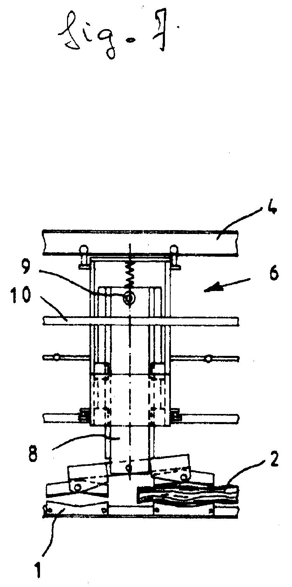

Wie die Fig. 3 und 4 zeigen, besteht jeder Laufwagen 6 aus einem Rahmen 14, der mittels der Rollen 5 an der Laufbahn 4 hängt und in dem das Druckstück 8 auf- und abverschiebbar ist. Hierzu sind in dem Rahmen 14 vier Führungsklötze 15 vorgesehen, die mit Kugelumlaufbüchsen 17 versehen sind und in denen das Druckstück 8 mit vorn und hinten angesetzten, gehärteten und geschliffenen lotrecht verlaufenden Rundstäben 16 leichtgängig geführt ist (Fig. 5).

Am unteren Ende des Druckstücks 8 ist in einer in der Bewegungsrichtung verlaufenden Nut 18 eine Pratze 11 um einen Bolzen 20 verschwenkbar angeordnet (Fig. 3, Laufwagen rechts im Bild), oder wie am Laufwagen links im Bild und in Fig. 2 gezeigt, sind zweiarmige Hebel 19 vorgesehen, an deren beiden Enden je eine Pratze 11 in einer Nut 21 um Bolzen 22 in gleicher Weise verschwenkbar angeordnet sind. In allen Fällen bildet der Grund der Nuten 18 u. 21 einen Anschlag, der die Schwenkbewegung der Pratzen 11 oder der zweiarmigen Hebel 19 begrenzt, damit das Druckstück 8 einen Holzstamm 2 auch dann festhält, wenn sich nur ein Ende einer Pratze 11 oder nur eine der beiden an einem zweiarmigen Hebel 19 angeordneten Pratzen 11 auf einen Holzstamm auflegt und der andere beispielsweise über einen Zwischenraum zwischen zwei Holzstämmen kommt und daher kein Widerlager findet.

Die Laufwagen 6 gelangen, wenn sie auf den über der Transportkette 1 liegenden Trakt der Laufbahn 4 kommen, zwischen zwei nur in Fig. 2-4 u. 6 dargestellte Führungsschienen 23, die sie gegen seitliches Ausschwenken oder Ausbrechen sichern.

Wie Fig. 6 zeigt, laufen die Rollen 5 der Laufwagen 6 innerhalb zweier U-förmig ausgebildeter Schienen, die die Laufbahn 4 bilden. Die Laufbahn kann aber auch ein anderes Profil haben. Die Laufwagen 6 weisen zur Führung entlang der Führungsschinen 23 beidseits Rollen 25 auf. Außerdem sind an den Laufwagen oben noch zusätzliche Rollen 26 vorgesehen, die innerhalb der Laufbahn 4 eine Führung der Laufwagen bewirken.

**Patentansprüche**

1. Anlage zum Spannen von einer Bearbeitungsmaschine zuzuführenden Holzstämmen, insbesondere von Krummholz, bei der die Holzstämme in Längsrichtung auf einer Transportkette aufliegen und auf dieser festgelegt werden durch sich von oben auf die Holzstämme auflegende Mitnehmer, die an einer oberhalb der Transportkette angeordneten geschlossenen Laufbahn geführt synchron mit der Transportkette bewegt werden und deren Abwärtsbewegung auf die Holzstämme durch eine Führungsschiene oder dergleichen gesteuert wird, **dadurch gekennzeichnet,** daß die Mitnehmer als gewichtige Druckstücke (8) ausgebildet sind, die in lotrechter Richtung beweglich an Laufwagen (6) angeordnet sind, die an der in einer waagerechten Ebene verlaufenden Laufbahn (4) hängend umlaufen.

2. Anlage nach Anspruch 1, **dadurch gekennzeichnet,** daß die Druckstücke (8) zusätzlich durch Federn (13) belastet sind.

3. Anlage nach Anspruch 1, **dadurch gekennzeichnet,** daß die Führungsschiene (10) neben der Laufbahn (4) verläuft und - bezogen auf die Umlaufrichtung (x) der Laufwagen (6) - neben dem Anfang desjenigen Teils der Laufbahn, der sich über der Transportkette (1) befindet, sich absenkt, und daß jedes Druckstück (8) mit einer auf der Führungsschiene laufenden Rolle (9) versehen ist.

4. Anlage nach Anspruch 3, **dadurch gekennzeichnet,** daß die Führungsschiene (10) - bezogen auf die Umlaufrichtung (x) der Laufwagen (6) - neben dem Ende desjenigen Teils der Laufbahn, der sich über der Transportkette (1) befindet, wieder anhebt.

5. Anlage nach Anspruch 3, **dadurch gekennzeichnet,** daß - bezogen auf die Umlaufrichtung (x) der Laufwagen (6) - neben dem Ende desjenigen Teils der Laufbahn (4), der sich über der Transportkette (1) befindet, ein Hebewerk angeordnet ist, daß die Druckstücke (8) anhebt, so daß die an ihnen vorgesehene Rolle (9) wieder auf die Führungsschiene (10) gelangt.

6. Anlage nach Anspruch 1, **dadurch gekennzeichnet,** daß die Laufwagen (6) durch Ketten (7) oder dergleichen miteinander verbunden und mit einem gemeinsamen Antrieb versehen sind.

7. Anlage nach Anspruch 1, **dadurch gekennzeichnet,** daß die Laufwagen (6) einzeln oder in Gruppen mit einem Antrieb versehen sind.

8. Anlage nach Anspruch 1, **dadurch gekennzeichnet,** daß unterhalb desjenigen Teils der Laufbahn (4), der sich über der Transportkette (1) befindet, beidseits der Laufwagen (6) Schienen (23) vorgesehen sind, zwischen denen sich die Laufwagen (6) bewegen.

9. Anlage nach Anspruch 1, **dadurch gekennzeichnet,** daß jedes Druckstück (8) an seinem unteren Ende eine in Bewegungsrichtung (x) sich erstreckende Pratze (11) aufweist, die in ihrer Mitte um eine quer zur Bewegungsrichtung verlaufende waagerechte Achse (20) an dem Druckstück schwenkbar gelagert ist und an ihren beiden Enden nach unten gerichtete Spitzen oder Schneiden (12) aufweist.

10. Anlage nach Anspruch 9, **dadurch gekennzeichnet,** daß die Pratzen (11) an den Enden eines in Bewegungsrichtung (x) sich erstreckenden zweiarmigen Hebels (19) angeordnet sind, der an dem Druckstück (8) um die quer zur Bewegungsrichtung verlaufende waagerechte Achse (20) verschwenkbar gelagert ist, wobei die Pratzen (11) um Bolzen (22) schwenkbar sind.

11. Anlage nach Anspruch 9 oder 10, **dadurch gekennzeichnet** daß die Schwenkbewegungen der Pratzen (11) und des zweiarmigen Hebels (19) durch an dem Druckstück (8) bzw. an dem Hebel vorgesehene Anschläge (18, 21) in beiden Schwenkrichtungen begrenzt sind.

12. Anlage nach Anspruch 1, **dadurch gekennzeichnet,** daß die Druckstücke (8) - bezogen auf die Bewegungsrichtung (x) der Laufwagen (6) - vorn und hinten keilartig verjüngt und jede verjüngte Seite mit je einer lotrecht angeordneten Führungsstange (18) versehen ist, mit denen sie in Kugelumlaufbüchsen (17) gelagert sind, die in den Laufwagen (6) angeordnet sind.

# Fig. 1

# Fig. 3

Fig. 2

Fig. 4

Fig. 5

Fig. 6

fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 387 446 (C.M. HERZ)<br>* Seite 2, linke Spalte, Zeile 18 - Zeile 51; Abbildungen 1,3 *<br>--- | 1-5,9-11 | B27B25/04<br>B27B29/08<br>B27B31/00<br>B23Q7/03<br>B65G17/46 |
| A | PATENT ABSTRACTS OF JAPAN<br>vol. 9, no. 92 (M-373)(1815) 20. April 1985<br>& JP-A-59 217 511 ( ISEKI NOKI K.K. ) 7.<br>Dezember 1984<br>* Zusammenfassung *<br>--- | 1-7,9,10 | |
| A | FR-A-2 201 953 (A. ARESCA)<br>* Seite 4, Zeile 4 - Zeile 16; Abbildung 2 *<br>--- | 1-3,8 | |
| A | DE-C-3 800 228 (CENTRAL'NYI<br>NAUCNO-ISSLEDOVATEL'SKIJ I<br>PROEKTNO-EKSPERIMENTAL'NYI INST)<br>* Spalte 5, Zeile 17 - Zeile 42; Abbildungen 1-3<br>*<br>--- | 1-9 | |
| A | FR-A-2 128 182 (ETABLISSEMENTS GUILLIET)<br>* Seite 4, Zeile 16 - Zeile 28; Abbildungen 1-3<br>*<br>--- | 1-3,9 | **RECHERCHIERTE SACHGEBIETE (Int. Cl.5)** |
| A | DE-A-1 652 387 (MASCHINENFABRIK ZUCKERMANN KG)<br><br>* Seite 3, Zeile 16 - Seite 4, Zeile 3;<br>Abbildungen 1,4 *<br>--- | 1,2,6,7,<br>9 | B27B<br>B23Q<br>B65G<br>B27C |
| A | US-A-2 581 682 (E.L. MCCORMICK)<br><br>----- | | |

Der vorliegende Recherchenbericht wurde für alle Patentansprüche erstellt

| Recherchenort | Abschlußdatum der Recherche | Prüfer |
|---|---|---|
| DEN HAAG | 19 NOVEMBER 1991 | LILIMPAKIS E. |